# EUROPÄISCHE PATENTANMELDUNG

(11) **EP 3 591 526 A1**
(43) Veröffentlichungstag der Anmeldung: **08.01.2020**
(21) Anmeldenummer: 18181843.6
(22) Anmeldetag: 05.07.2018
(51) Int. Cl.: G06F 9/50

(54) **VERFAHREN ZUM SKALIEREN EINER APPLIKATION IN EINER PLATFORM AS A SERVICE, PAAS, -PLATTFORM**

(71) Anmelder: Siemens Aktiengesellschaft, 80333 München (DE)
(72) Erfinder: Simakov, Dmitry, 76131 Karlsruhe (DE)

(57) **Zusammenfassung**

Verfahren zum Skalieren einer Applikation (APP) in einer Platform as a Service, PaaS,-Plattform mit den folgenden Schritten:
(a) Senden (S1) einer Skalierungsanforderung (SK-REQ) von einer Applikation (APP) an einen an sie angebundenen Skalierungsservice (SS), falls die Applikation (APP) während ihrer Ausführung zur Laufzeit durch Auswertung interner Applikations-Leistungsmetriken (APP-LM) feststellt, dass eine Skalierung für die Applikation (APP) erforderlich wird;
(b) Weiterleiten (S2) der empfangenen Skalierungsanforderung (SK-REQ) durch den Skalierungsservice (SS) an einen Cloud-Controller (CC) der PaaS-Plattform, falls die Applikation (APP) sich in der Skalierungsanforderung (SK-REQ) gegenüber dem Skalierungsservice (SS) erfolgreich authentifiziert; und
(c) automatisches Skalieren (S3) der Applikation (APP) durch den Cloud-Controller (CC) entsprechend der weitergeleiteten und durch den Cloud-Controller (CC) empfangenen Skalierungsanforderung (SK-REQ).

## Beschreibung

Platform as a Service, (PaaS)-Dienste vereinfachen die Entwicklung von Anwendungen bzw. Applikationen. Es werden dabei Ressourcen und Tools zur Verfügung gestellt, die ein Entwickler bei Bedarf abrufen kann.

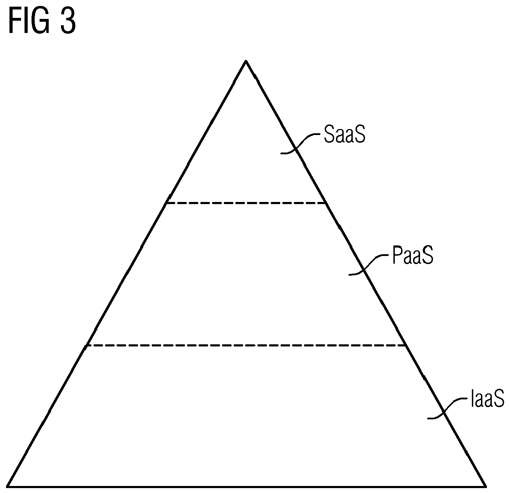

Clouds können Dienste bzw. Services über drei grundlegende Ebenen bereitstellen, wie in Fig. 3 schematisch dargestellt. Auf der untersten Ebene können Dienste als Infrastructure as a Service (IaaS) bereitgestellt werden. IaaS bietet auf benutzerfreundliche Weise Zugriff auf die Infrastruktur, sodass ein Benutzer bei Bedarf virtuelle Maschinen, Datenspeicher, Datenbanken oder andere Dienste nutzen kann. Die oberste Dienstebene besteht aus Software as a Service (SaaS) und stellt Anwendungen in einer cloudbasierten Version bereit.

Die mittlere Ebene wird durch die Platform as a Service-Plattform (PaaS) gebildet. PaaS bietet eine Entwicklungs- und Hostingplattform für Anwendungen bzw. Applikationen, die für spezielle Anforderungen eines Nutzers optimiert sind. PaaS erlaubt ein schnelles Entwickeln, Testen und Bereitstellen von cloudfähigen Applikationen.

Bei herkömmlichen PaaS-Plattformen erfolgt die Skalierung von Applikationen bzw. Anwendungen anhand externer Applikations-Leistungsmetriken entsprechend vorgegebener Regeln (Rules) und Regelsätzen (Policies). Diese vorgegebenen externen Applikations-Leistungsmetriken umfassen beispielsweise einen Durchsatz, eine Latenzzeit, eine CPU-Auslastung oder eine Speichernutzung. Beispielsweise kann entsprechend vorgegebener Regeln eine Instanz der Applikation hinzugefügt werden, falls der durchschnittliche Durchsatz einen bestimmten Schwellenwert überschreitet. Ferner könnte beispielsweise entsprechend dieser Policy eine Instanz der Applikation entfernt werden, falls der durchschnittliche Durchsatz unter einen bestimmten Schwellenwert fällt.

Allerdings spielen in vielen Anwendungsfällen derartige externe Applikations-Leistungsmetriken nur eine geringfügige Rolle. Vielmehr spielen in vielen Anwendungsfällen besondere anwendungsspezifische Parameter eine weit größere Rolle hinsichtlich einer notwendigen Installierung der jeweiligen Applikation. Beispielsweise ist die Länge einer intern in der Applikation verwendeten Warteschlange relevant für eine notwendige Skalierung der Applikation.

Bei einer herkömmlichen PaaS-Plattform erfolgt somit in vielen Fällen die Skalierung von Applikationen suboptimal, da externe Applikations-Leistungsmetriken für die Skalierung verwendet werden, die anwendungsspezifische Skalierungserfordernisse die Applikation nicht berücksichtigen.

Es ist daher eine Aufgabe der vorliegenden Erfindung ein Verfahren zum Skalieren einer Applikation in einer Platform as a Service, PaaS-Plattform zu schaffen, das die Skalierung der Applikation in der Plattform optimiert.

Diese Aufgabe wird erfindungsgemäß durch ein Verfahren zum Skalieren einer Applikation in einer Platform as a Service, PaaS,-Plattform mit den in Patentanspruch 1 angegebenen Merkmalen gelöst.

Die Erfindung schafft demgemäß ein Verfahren zum Skalieren einer Applikation in einer Platform as a Service (PaaS)-Plattform mit den folgenden Schritten:
Senden einer Skalierungsanforderung von einer Applikation an einen an sie angebundenen Skalierungsservice, falls die Applikation während ihrer Ausführung zur Laufzeit durch Auswertung interner Applikations-Leistungsmetriken feststellt, dass eine Skalierung der Applikation erforderlich wird,
Weiterleiten der empfangenen Skalierungsanforderung durch den Skalierungsservice an einen Cloud-Controller der PaaS-Plattform, falls die Applikation sich in der Skalierungsanforderung gegenüber dem Skalierungsservice erfolgreich authentifiziert,und
automatisches Skalieren der Applikation durch den Cloud-Controller entsprechend der weitergeleiteten und durch den Cloud-Controller empfangenen Skalierungsanforderung.

In einer möglichen Ausführungsform des erfindungsgemäßen Verfahrens wird die Applikation entsprechend der weitergeleiteten, durch den Cloud-Controller der PaaS-Plattform empfangenen Skalierungsanforderung automatisch horizontal und/oder vertikal skaliert.

Bei einer möglichen Ausführungsform des erfindungsgemäßen Verfahrens skaliert der Cloud-Controller der PaaS-Plattform die Applikation horizontal, indem der Cloud-Controller weitere Instanzen der als Datenobjekt in die PaaS-Plattform geladenen Applikation entsprechend der empfangenen Skalierungsanforderungen in einem Container startet und auf Ausführungsmaschinen der PaaS-Plattform ausführen lässt.

In einer weiteren möglichen Ausführungsform des erfindungsgemäßen Verfahrens skaliert der der Cloud-Controller der PaaS-Plattform die Applikation vertikal, indem der Cloud-Controller der Applikation entsprechend der empfangenen Skalierungsanforderung Cloud-Ressourcen zuweist.

Bei einer weiteren möglichen Ausführungsform des erfindungsgemäßen Verfahrens wird von dem Cloud-Controller der PaaS-Plattform über den Skalierungsservice an die Applikation ein Skalierungsergebnis übertragen, welches angibt, ob die in der Skalierungsanforderung der Applikation geforderte Skalierung der Applikation durch den Cloud-Controller der PaaS-Plattform erfolgreich durchgeführt worden ist.

Bei einer weiteren möglichen Ausführungsform des erfindungsgemäßen Verfahrens wird eine in einer lokalen Entwicklungsumgebung eines Anwendungsentwicklers bereitgestellte Applikation über eine externe API des Cloud-Controllers in die PaaS-Plattform geladen und dort als Datenobjekt gespeichert.

Bei einer weiteren möglichen Ausführungsform des erfindungsgemäßen Verfahrens wird die bereitgestellte Applikation an eine erzeugte Instanz des Skalierungsservices angebunden, indem eine eindeutige URL und Zugangsberechtigungsnachweise von dem Skalierungsservice generiert und der Applikation zur Verfügung gestellt werden, wobei die Applikation die zur Verfügung gestellte URL und Zugangsberechtigungen für die an den Skalierungsservice gerichtete Skalierungsanforderung verwendet.

Bei einer weiteren möglichen Ausführungsform des erfindungsgemäßen Verfahrens meldet der Skalierungsservice die erfolgreiche Anbindung der Applikation an die Applikation zurück.

Bei einer weiteren möglichen Ausführungsform des erfindungsgemäßen Verfahrens weist die Applikation einen Applikationsprogrammcode auf, der mindestens eine Auswertelogik zur automatischen Auswertung interner Applikations-Leistungsmetriken beinhaltet, welche feststellt, ob eine horizontale und/oder vertikale Skalierung der Applikation (APP) erforderlich ist.

Bei einer weiteren möglichen Ausführungsform des erfindungsgemäßen Verfahrens werden eine oder mehrere Instanzen der skalierten Applikation auf einer oder mehreren Ausführungsmaschinen der PaaS-Plattform ausgeführt.

Bei einer weiteren möglichen Ausführungsform des erfindungsgemäßen Verfahrens wird bei einem Programmabsturz einer Instanz der Applikation auf einer Ausführungsmaschine der PaaS-Plattform die dort ausgeführte Instanz der Applikation automatisch auf einer anderen Ausführungsmaschine der PaaS-Plattform gestartet.

Die Erfindung schafft ferner eine PaaS-Plattform mit den in Patentanspruch 12 angegebenen Merkmalen.

Die Erfindung schafft demnach eine PaaS-Plattform mit einem Cloud-Controller, der eine in einer empfangenen Skalierungsanforderung enthaltene geforderte Skalierung einer Applikation vornimmt, indem er eine in die PaaS-Plattform zuvor geladene Instanz der Applikation entsprechend der empfangenen Skalierungsanforderung automatisch horizontal und/oder vertikal skaliert.

In einer weiteren möglichen Ausführungsform der PaaS-Plattform empfängt der Cloud-Controller die Skalierungsanforderung von einem an die Applikation gebundenen Skalierungsservice, der die von der Applikation erhaltene Skalierungsanforderung nach erfolgreicher Authentifizierung der Applikation an den Cloud-Controller der PaaS-Plattform weiterleitet.

Bei einer weiteren möglichen Ausführungsform der erfindungsgemäßen PaaS-Plattform werden eine oder mehrere Instanzen der durch den Cloud-Controller horizontal skalierten Applikation auf einer oder mehreren durch den Cloud-Controller zugewiesenen Ausführungsmaschinen der PaaS-Plattform ausgeführt.

Bei einer weiteren möglichen Ausführungsform der erfindungsgemäßen PaaS-Plattform weist der Cloud-Controller der PaaS-Plattform eine externe API zum Laden der Applikation in die PaaS-Plattform auf.

Im Weiteren werden mögliche Ausführungsformen des erfindungsgemäßen Verfahrens und der erfindungsgemäßen PaaS-Plattform unter Bezugnahme auf die beigefügten Figuren näher erläutert.

Es zeigen:
- Fig. 1: ein Ablaufdiagramm zur Darstellung eines Ausführungsbeispiels des erfindungsgemäßen Verfahrens zu Skalieren einer Applikation in einer PaaS-Plattform;
- Fig. 2: ein Signaldiagramm zur Darstellung eines Ausführungsbeispiels des erfindungsgemäßen Verfahrens zum Skalieren einer Applikation;
- Fig. 3: eine schematische Darstellung von Clouddiensten mit einer PaaS-Dienstebene.

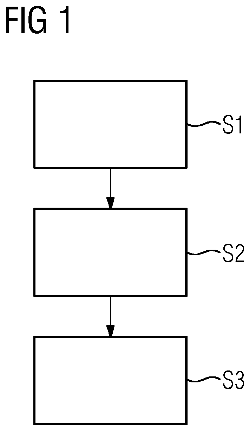

Wie man aus Fig. 1 erkennen kann, weist ein erfindungsgemäßes Verfahren zum Skalieren einer Applikation in einer PaaS-Plattform bei dem dargestellten Ausführungsbeispiel im Wesentlichen drei Schritte auf.

In einem ersten Schritt S1 wird eine Skalierungsanforderung SK-REQ von einer Applikation APP an einen an sie angebundenen Skalierungsservice SS gesendet, falls die Applikation während ihrer Ausführung zur Laufzeit durch Auswertung interner Applikations-Leistungsmetriken APP-LM feststellt, dass eine Skalierung für die Applikation APP erforderlich wird.

In einem weiteren Schritt S2 wird die empfangene Skalierungsanforderung SM-REQ durch den Skalierungsservice SS an einen Cloud-Controller CC der PaaS-Plattform weitergeleitet, falls sich die Applikation APP in der Skalierungsanforderung SK-REQ gegenüber dem Skalierungsservice erfolgreich authentifiziert.

In einem weiteren Schritt S3 erfolgt eine automatische Skalierung der Applikation APP durch den Cloud-Controller CC entsprechend der weitergeleiteten und durch den Cloud-Controller CC empfangenen Skalierungsanforderung.

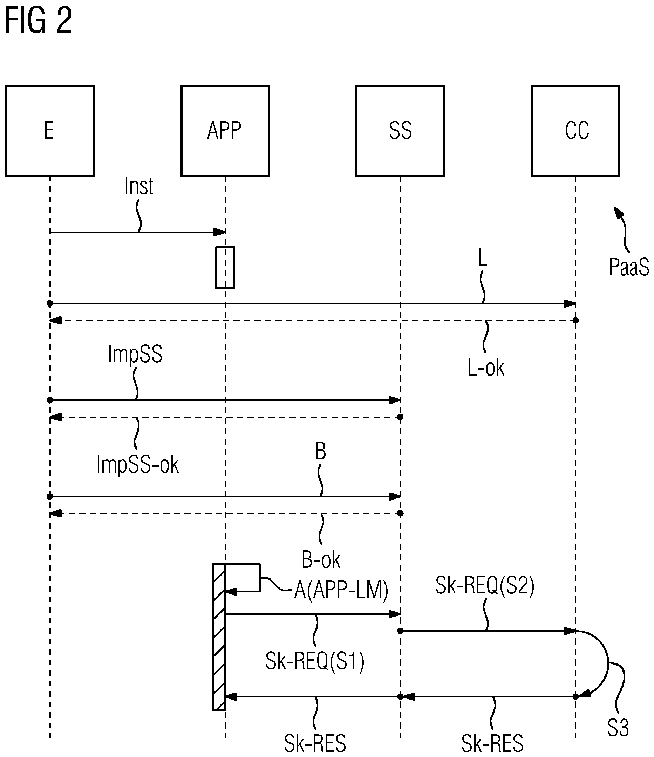

Fig. 2 zeigt ein Signalablaufdiagramm zur Darstellung eines Ausführungsbeispiels des erfindungsgemäßen Verfahrens zum Skalieren einer Applikation APP in einer Platform as a Service, PaaS-Plattform. Fig. 2 zeigt die Kommunikation zwischen einem Entwickler E, einer von dem Entwickler E entwickelten und installierten Applikation bzw. Anwendung APP, einem Skalierungsservice SS sowie einem Cloud-Controller CC der PaaS-Plattform. Ein Entwickler bzw. Nutzer E kann in einer lokalen Entwicklungsumgebung eine Applikation bzw. Anwendung APP entwickeln bzw. programmieren und auf einem Rechner der Cloud installieren (deploy) wie in Fig. 2 schematisch dargestellt. Die in der lokalen Entwicklungsumgebung des Anwendungsentwicklers E bereitgestellte Applikation APP wird über eine externe API des Cloud-Controllers CC in die PaaS-Plattform geladen (L) und dort als Datenobjekt gespeichert. Der Anwendungsentwickler E kann die Applikation APP zunächst in seiner eigenen von ihm bevorzugten Entwicklungsumgebung entwickeln und anschließen in der PaaS-Plattform installieren, insbesondere mittels einer Cloud-Controller CC-API.

Der Cloud-Controller CC der PaaS-Plattform informiert den Entwickler E hierüber, insbesondere ob das Hochladen der von dem Anwendungsentwickler bereitgestellten Applikation APP in die PaaS-Plattform erfolgreich durchgeführt worden ist (L-ok). In einem weiteren Schritt generiert und implementiert der Anwendungsentwickler E eine Instanz eines Skalierungsservice SS (ImpSS) unter Verwendung von Konfigurationsparametern. Der Skalierungsservice SS meldet an den Anwendungsentwickler E die erfolgreiche Ausführung dieser Operation zurück (ImpSS-ok), wie in Fig. 2 schematisch dargestellt.

In einem weiteren Schritt bindet (B) der Anwendungsentwickler E die Applikation APP an die zuvor generierte Skalierungsserviceinstanz SS. Eine eindeutige URL und Zugangsberechtigungen (credentials) werden von dem Skalierungsservice SS generiert und der Applikation APP zur Verfügung gestellt. Die Applikation APP kann die zur Verfügung gestellte URL und Zugangsberechtigungen später für eine an den Skalierungsservice gerichtete Skalierungsanforderung SK-REQ verwenden. Der Skalierungsservice SS meldet die erfolgreiche Anbindung der Applikation (APP) an den Skalierungsservice SS zurück an die Applikation bzw. den Anwendungsentwickler (B-ok).

Die Applikation bzw. Anwendung APP weist einen Applikationsprogrammcode auf, der mindestens eine Auswertelogik zur automatischen Auswertung interner Applikations-Leistungsmetriken APP-LM beinhaltet, und welche feststellt, ob eine horizontale und/oder vertikale Skalierung der Applikation APP erforderlich ist. Der Applikationsprogrammcode umfasst den Sourcecode der Applikation APP, der in verschiedenartigen Programmiersprachen seitens des Anwendungsentwicklers E generiert werden kann. Dieser Applikationsprogrammcode beinhaltet mindestens eine interne Auswertelogik zur automatischen Auswertung interner Applikations-Leistungsmetriken APP-LM, die von dem spezifischen Anwendungsfall abhängen. Ein Beispiel für interne Applikations-Leistungsmetriken APP-LM sind beispielsweise Längen L von Warteschlangen Q (job queue length). Die Applikation APP wertet die internen Applikations-Leistungsmetriken APP-LM während der Laufzeit (runtime) aus, um festzustellen, ob eine Skalierung der Applikation APP erforderlich wird oder nicht. Die Applikation APP führt somit während ihrer Ausführung eine Auswertung (A) ihrer internen Applikations-Leistungsmetriken APP-LM durch, um festzustellen, ob eine Skalierung gerade erforderlich wird. Falls die Applikation APP feststellt, dass eine Skalierung notwendig wird, sendet sie in Schritt S1 eine Skalierungsanforderung SK-REQ an den an sie angebundenen Skalierungsserver SS, wie in Fig. 2 dargestellt.

Für die Skalierungsanforderung SK-REQ verwendet die Applikation APP die zuvor zur Verfügung gestellte URL und die zur Verfügung gestellten Zugangsberechtigungen (access credentials). Der Skalierungsservice SS überprüft die in der Skalierungsanforderung SK-REQ enthaltenen Zugangsberechtigungsnachweise sowie die Skalierungskonfiguration und mapped die URL auf eine bestimmte konkrete Applikation APP. Falls die Applikation APP sich in der Skalierungsanforderung SK-REQ gegenüber dem Skalierungsservice SS erfolgreich authentifiziert hat, leitet der Skalierungsservice SS die von ihm empfangene Skalierungsanforderung SK-REQ in Schritt S2 an den Cloud-Controller CC der PaaS-Plattform weiter.

Der Cloud-Controller CC der PaaS-Plattform nimmt anschließend in Schritt S3 die Skalierung der Applikation APP entsprechend der von ihm empfangenen Skalierungsanforderung SK-REQ automatisch vor. Die Applikation APP wird entsprechend der weitergeleiteten und durch den Cloud-Controller CC der PaaS-Plattform empfangenen Skalierungsanforderung SK-REQ automatisch horizontal und/oder vertikal im Schritt S3 skaliert. Der Cloud-Controller CC der Paas-Plattform kann die Applikation APP horizontal skalieren, indem der Cloud-Controller CC weitere Instanzen der als Datenobjekt in die PaaS-Plattform geladenen Applikation APP entsprechend der empfangenen Skalierungsanforderung SK-REQ in einem Container startet und auch Ausführungsmaschinen (execution engines) der PaaS-Plattform ausführen lässt. Der Cloud-Controller CC der PaaS-Plattform kann die Applikation APP vertikal skalieren, indem der Cloud-Controller CC der Applikation APP entsprechend der empfangenen Skalierungsanforderung SK-REQ Cloud-Ressourcen zuweist. Diese Cloud-Ressourcen umfassen beispielsweise CPU-Ressourcen und/oder Speicherressourcen. In einem weiteren Schritt kann der Cloud-Controller der PaaS-Plattform über den Skalierungsservice SS an die Applikation APP ein Skalierungsergebnis SK-RES übertragen, welches angibt, ob die in der Skalierungsanforderung SK-REQ von der Applikation APP geforderte Skalierung der Applikation durch den Cloud-Controller CC der PaaS-Plattform erfolgreich durchgeführt worden ist. Das übertragene Skalierungsergebnis bzw. Skalierungsresultat SK-RES kann Informationen enthalten, die für die Applikation hinsichtlich der Skalierung relevant sind, beispielsweise das Ausmaß der vorgenommenen horizontalen und/oder vertikalen Skalierung. Das Senden S1 einer Skalierungsanforderung SK-REQ, deren Weiterleitung S2 sowie die automatische Skalierung S3 seitens des Plattform Cloud-Controllers CC sowie die Rückmeldung an die Applikation kann in einer möglichen Ausführungsform kontinuierlich wiederholt werden, insbesondere um die Anzahl der gleichzeitig ablaufenden Applikationsinstanzen zu optimieren.

Eine oder mehrere Instanzen der skalierten Applikation können auf einer oder mehreren Ausführungsmaschinen der PaaS-Plattform ausgeführt werden. Bei einem Programmabsturz einer Instanz der Applikation auf einer dieser Ausführungsmaschinen der PaaS-Plattform kann die dort ausgeführte Instanz der Applikation APP automatisch auf einer anderen Ausführungsmaschine der PaaS-Plattform gestartet werden. Während der Laufzeit der Applikation ist die Applikation selbst für die Auswertung ihrer internen Applikations-Leistungsmetriken APP-LM verantwortlich und erzeugt bei Bedarf entsprechende Skalierungsanforderungen SK-REQ, die durch den Skalierungsservice SS an den Cloud-Controller CC weitergeleitet werden. Dieser Cloud-Controller CC nimmt die erforderliche in der Skalierungsanforderung spezifizierte Skalierung automatisch vor und informiert die Applikation APP über das Skalierungsergebnis. Der Skalierungsservice SS kann in den PaaS (cloud foundry) market place integriert werden und erlaubt jeder Applikation APP eine Instanz dieses Skalierungsservices SS an sich zu binden. Der Anbindungsprozess kann eine applikationsspezifische Skalierungskonfiguration erzeugen, die beispielsweise basierend auf bereitgestellten Parametern, beispielsweise eine maximale oder minimale Anzahl von gleichzeitig ablaufenden Instanzen umfassen. Der Skalierungsservice SS kann eine eindeutige URL (Uniform Resource Locator) sowie Zugangsberechtigungsnachweise generieren und der Applikation APP zur Verfügung stellen, welche diese zur Verfügung gestellten Zugangsberechtigungsnachweise sowie die erhaltene URL für spätere Skalierungsanforderungen, welche an den Skalierungsservice SS gerichtet sind, verwendet.

Die in dem erfindungsgemäßen Verfahren verwendeten internen Applikations-Leistungsmetriken APP-LM sind vordefiniert und anwendungsspezifisch und spiegeln besser Skalierungsanforderungen einer Applikation APP wieder als generelle externe Leistungsmetriken, wie sie bei bisherigen PaaS-Plattformen verwendet werden. Bei einer möglichen Ausführungsform des erfindungsgemäßen Verfahrens können neben den internen Applikations-Leistungsmetriken APP-LM optional zusätzlich auch externe Leistungsmetriken für die horizontale und/oder vertikale Skalierung seitens des Plattform Cloud-Controllers CC herangezogen werden.

Die erfindungsgemäße PaaS-Plattform, so wie sie in Fig. 2 schematisch dargestellt ist, weist mindestens einen Cloud-Controller CC auf, der eine in einer empfangenen Skalierungsanforderung SK-REQ enthaltene geforderte Skalierung einer Applikation APP automatisch vornimmt, indem er eine in der PaaS-Plattform zuvor geladene Instanz zur Applikation APP entsprechend der empfangenen Skalierungsanforderung SK-REQ automatisch horizontal und/oder vertikal skaliert. Der Cloud-Controller CC empfängt dabei die Skalierungsanforderung SK-REQ von einem an die Applikation APP gebundenen Skalierungsservice SS, welcher die von der Applikation erhaltene Skalierungsanforderung nach erfolgreicher Authentifizierung der Applikation an den Cloud-Controller CC der PaaS-Plattform weiterleitet. Eine oder mehrere Instanzen der durch den Cloud-Controller CC horizontal skalierten Applikation können auf einer oder mehreren durch den Cloud-Controller CC zugewiesenen Ausführungsmaschinen (execution engines) der PaaS-Plattform ausgeführt werden. Der Cloud-Controller CC der PaaS-Plattform weist vorzugsweise eine externe API zum Laden der Applikation APP in die PaaS-Plattform auf.

Eine Applikation APP kann jede beliebige Anwendung umfassen. Beispielsweise kann ein Temperatursensor in regelmäßigen Zeitabständen Temperaturwerte zur Datenauswertung liefern. Eine Applikation kann beispielsweise darin bestehen, Durchschnittstemperaturwerte für einen vergangenen Zeitraum zu berechnen. Dabei ist es beispielsweise möglich, dass die Applikation bzw. Anwendung APP alle empfangenen Temperaturwerte für einen Zeitraum von beispielsweise 12 Monaten aufsummiert und durch die Anzahl der empfangenen Temperaturwerte dividiert, um den Durchschnittstemperaturwert für diesen Zeitraum zu errechnen. Aufgrund der Vielzahl von Temperaturwerten über den relativ langen Zeitraum (1 Jahr) braucht allerdings eine Instanz der Applikation APP für die Berechnung des Temperaturdurchschnittswertes relative lange. Durch horizontale oder vertikale Skalierung der Applikation APP kann der Berechnungszeitraum reduziert werden. Beispielsweise kann eine horizontale Skalierung der Applikation darin bestehen, dass ein Temperaturdurchschnittswert für jeden der 12 Monate durch eine Instanz der Applikation separat berechnet wird, sodass beispielsweise 12 Durchschnittstemperaturwerte berechnet werden und anschließend ein Jahrestemperaturdurchschnittswert auf Grundlage der errechneten Monatstemperaturdurchschnittswerte berechnet wird. Durch diese Parallelisierung bzw. horizontale Skalierung kann somit die Berechnung der Temperaturdurchschnittswerte, beispielsweise der Jahrestemperaturdurchschnittswerte, erheblich beschleunigt werden. Die automatische Skalierung der Applikation APP, beispielsweise der Durchschnittswertberechnung, durch den Cloud-Controller CC, erfolgt erfindungsgemäß entsprechend der weitergeleiteten durch den Cloud-Controller CC empfangene Skalierungsanforderung. Diese Skalierungsanforderung wird durch die Applikation APP selbst generiert, falls die Applikation durch Auswertung interner Applikations-Leistungsmetriken APP-LM zur Laufzeit feststellt, dass eine Skalierung für die Applikation erforderlich wird. Die automatische Skalierung stellt sicher, dass eine optimale Anzahl von Applikationsinstanzen zur Verfügung steht, um eine momentane Arbeitslast zu bewerkstelligen und die Ausnutzung der Cloud-Ressourcen zu optimieren.

Der Cloud-Controller CC kann die Applikation APP entsprechend der erhaltenen Skalierungsanforderung SK-REQ horizontal und/oder vertikal skalieren. Beispielsweise kann der Cloud-Controller CC die Applikation APP horizontal nach oben skalieren, indem der Cloud-Controller weitere Instanzen der als Datenobjekt in der Paas-Plattform geladenen Applikation entsprechend der empfangenen Skalierungsanforderung in einem Container startet und auf Ausführungsmaschinen der PaaS-Plattform ausführen lässt. Umgekehrt kann der Cloud-Controller der PaaS-Plattform die Applikation horizontal nach unten skalieren, indem er Instanzen der jeweiligen Applikation entsprechend einer empfangenen Skalierungsanforderung SK-REQ wieder reduziert.

Der Cloud-Controller CC der PaaS-Plattform kann zudem die Applikation vertikal sowohl nach oben als auch nach unten skalieren. Beispielsweise kann der Cloud-Controller der Applikation APP entsprechend der empfangenen Skalierungsanforderung SK-REQ weitere Cloud-Ressourcen zuweisen. Umgekehrt kann der Cloud-Controller der Applikation APP entsprechend einer weiteren erhaltenen Skalierungsanforderung SK-REQ auch wieder Cloud-Ressourcen entziehen.

Weitere Ausführungsformen des erfindungsgemäßen Verfahrens und der erfindungsgemäßen PaaS-Plattform sind möglich. In einer möglichen Ausführungsform weisen die verschiedenen Applikationen Prioritäten auf, die durch den Cloud-Controller CC ausgewertet werden. Beispielsweise werden Skalierungsanforderungen SK-REQ von Applikationen mit hoher Priorität gegenüber anderen Skalierungsanforderungen SK-REQ durch den Cloud-Controller CC bevorzugt behandelt. Weiterhin kann beispielsweise bei einer Applikation APP, die während einer Skalierungsanforderung SK-REQ seitens des Cloud-Controllers CC bereits einmal schon abgewiesen wurde, in der Priorität hinsichtlich der Ausführung der Skalierung schrittweise höher eingestuft werden. Die Skalierungsprioritäten der verschiedenen Applikationen können somit statisch als auch dynamisch sein.

Eine Health Manager Service Plattform kann vorgesehen werden, welcher Applikationen APP lauffähig hält und sicherstellt, dass bei einem Programmabsturz die jeweilige Applikation APP auf einer anderen Ausführungsmaschine gestartet wird. Verschiedene Entitäten der Plattform können über einen Nachrichten-Bus miteinander kommunizieren.

Die erfindungsgemäße PaaS-Plattform automatisiert das Erstellen, Einrichten und Skalieren von Anwendungen. Die erfindungsgemäße PaaS-Plattform erlaubt verkürzte Produktzyklen, da Anwendungsentwickler mehr Anwendungsdienste entwickeln und anbieten können. Die Anwendungen sind in der Lage, selbstständig zu skalieren, wobei sie dynamisch IP Adressen nutzen können und Komponenten, wie beispielsweise Ressourcen, derart aufteilen, dass sie auf mehreren Ausführungsmaschinen, insbesondere virtuellen Maschinen, laufen können. Mithilfe der PaaS-Plattform ist es möglich eine Anwendung bzw. Applikation aus einer integrierten Entwicklungsumgebung heraus in die Cloud-Plattform zu laden.

## Patentansprüche

1. Verfahren zum Skalieren einer Applikation (APP) in einer Platform as a Service, PaaS,-Plattform mit den folgenden Schritten:
(a) Senden (S1) einer Skalierungsanforderung (SK-REQ) von einer Applikation (APP) an einen an sie angebundenen Skalierungsservice (SS), falls die Applikation (APP) während ihrer Ausführung zur Laufzeit durch Auswertung interner Applikations-Leistungsmetriken (APP-LM) feststellt, dass eine Skalierung für die Applikation (APP) erforderlich wird;
(b) Weiterleiten (S2) der empfangenen Skalierungsanforderung (SK-REQ) durch den Skalierungsservice (SS) an einen Cloud-Controller (CC) der PaaS-Plattform, falls die Applikation (APP) sich in der Skalierungsanforderung (SK-REQ) gegenüber dem Skalierungsservice (SS) erfolgreich authentifiziert; und
(c) automatisches Skalieren (S3) der Applikation (APP) durch den Cloud-Controller (CC) entsprechend der weitergeleiteten und durch den Cloud-Controller (CC) empfangenen Skalierungsanforderung (SK-REQ).

2. Verfahren nach Anspruch 1,
wobei die Applikation (APP) entsprechend der weitergeleiteten, durch den Cloud-Controller (CC) der PaaS-Plattform empfangenen Skalierungsanforderung (SK-REQ) automatisch horizontal und/oder vertikal skaliert wird.

3. Verfahren nach Anspruch 2,
wobei der Cloud-Controller (CC) der PaaS-Plattform die Applikation (APP) horizontal skaliert, indem der Cloud-Controller (CC) weitere Instanzen der als Datenobjekt in die PaaS-Plattform geladenen Applikation (APP) entsprechend der empfangenen Skalierungsanforderungen (SK-REQ) in einem Container startet und auf Ausführungsmaschinen der PaaS-Plattform ausführen lässt.

4. Verfahren nach Anspruch 2,
wobei der Cloud-Controller (CC) der PaaS-Plattform die Applikation (APP) vertikal skaliert, indem der Cloud-Controller (CC) der Applikation (APP) entsprechend der empfangenen Skalierungsanforderung (SK-REQ) weitere Cloud-Ressourcen zuweist.

5. Verfahren nach einem der vorangehenden Ansprüche 1 bis 4,
wobei von dem Cloud-Controller (CC) der PaaS-Plattform über den Skalierungsservice (SS) an die Applikation (APP) ein Skalierungsergebnis (SK-RES) übertragen wird, welches angibt, ob die in der Skalierungsanforderung (SK-REQ) der Applikation (APP) geforderte Skalierung der Applikation (APP) durch den Cloud-Controller (CC) der PaaS-Plattform erfolgreich durchgeführt worden ist.

6. Verfahren nach einem der vorangehenden Ansprüche 1 bis 5,
wobei eine in einer lokalen Entwicklungsumgebung eines Anwendungsentwicklers bereitgestellte Applikation (APP) über eine externe API des Cloud-Controllers (CC) in die PaaS-Plattform geladen und dort als Datenobjekt gespeichert wird.

7. Verfahren nach Anspruch 6,
wobei die bereitgestellte Applikation (APP) an eine erzeugte Instanz des Skalierungsservices (SS) angebunden wird, indem eine eindeutige URL und Zugangsberechtigungsnachweise von dem Skalierungsservice (SS) generiert und der Applikation (APP) zur Verfügung gestellt werden, wobei die Applikation (APP) die zur Verfügung gestellte URL und Zugangsberechtigungen für die an den Skalierungsservice (SS) gerichtete Skalierungsanforderung (SK-REQ) verwendet.

8. Verfahren nach einem der vorangehenden Ansprüche,
wobei der Skalierungsservice (SS) die erfolgreiche Anbindung der Applikation (APP) an die Applikation (APP) rückmeldet.

9. Verfahren nach einem der vorangehenden Ansprüche,
wobei die Applikation (APP) einen Applikationsprogrammcode aufweist, der mindestens eine Auswertelogik zur automatischen Auswertung interner Applikations-Leistungsmetriken (APP-LM) beinhaltet, welche feststellt, ob eine horizontale und/oder vertikale Skalierung der Applikation (APP) erforderlich ist.

10. Verfahren nach einem der vorangehenden Ansprüche,
wobei eine oder mehrere Instanzen der skalierten Applikation (APP) auf einer oder mehreren Ausführungsmaschinen der PaaS-Plattform ausgeführt werden.

11. Verfahren nach einem der vorangehenden Ansprüche,
wobei bei einem Programmabsturz einer Instanz der Applikation (APP) auf einer Ausführungsmaschine der PaaS-Plattform die dort ausgeführte Instanz der Applikation (APP) automatisch auf einer anderen Ausführungsmaschine der PaaS-Plattform gestartet wird.

12. PaaS-Plattform mit einem Cloud-Controller (CC), der eine in einer empfangenen Skalierungsanforderung (SK-REQ) enthaltenen geforderte Skalierung einer Applikation (APP) vornimmt, indem er eine in die PaaS-Plattform zuvor geladene Instanz der Applikation (APP) entsprechend der empfangenen Skalierungsanforderung (SK-REQ) automatisch horizontal und/oder vertikal skaliert.

13. PaaS-Plattform nach Anspruch 12,
wobei der Cloud-Controller (CC) die Skalierungsanforderung (SK-REQ) von einem an die Applikation (APP) gebundenen Skalierungsservice (SS) empfängt, der die von der Applikation (APP) erhaltene Skalierungsanforderung (SK-REQ) nach erfolgreicher Authentifizierung der Applikation (APP) an den Cloud-Controller (CC) der PaaS-Plattform weiterleitet.

14. PaaS-Plattform nach Anspruch 12 oder 13,
wobei eine oder mehrere Instanzen der durch den Cloud-Controller (CC) horizontal skalierten Applikation (APP) auf einer oder mehreren durch den Cloud-Controller (CC) zugewiesenen Ausführungsmaschinen der PaaS-Plattform ausführbar sind.

15. PaaS-Plattform nach einem der vorangehenden Ansprüche 12 bis 14,
wobei der Cloud-Controller (CC) der PaaS-Plattform eine externe API zum Laden der Applikation (APP)in die PaaS-Plattform aufweist.
